# EUROPÄISCHE PATENTSCHRIFT

(11) **EP 3 153 077 B1**
(45) Veröffentlichungstag und Bekanntmachung des Hinweises auf die Patenterteilung: **21.03.2018**
(21) Anmeldenummer: 16187334.4
(22) Anmeldetag: 06.09.2016
(51) Int. Cl.: A47J 31/44

(54) **GETRÄNKEZUBEREITUNGSVORRICHTUNG**
DEVICE FOR PREPARING BEVERAGES
DISPOSITIF DE PRÉPARATION DE BOISSONS

(30) Priorität: 05.10.2015 DE 102015116889
(43) Veröffentlichungstag der Anmeldung: 12.04.2017
(73) Patentinhaber: Eugster/Frismag AG, 8580 Amriswil (CH)
(72) Erfinder: Oehninger, Max, 8625 Gossau (CH)
(74) Vertreter: Patentanwälte Behrmann Wagner PartG mbB

(56) Entgegenhaltungen:
- EP-A1- 2 721 973
- DE-C2- 3 843 702
- US-A1- 2012 186 457

## Beschreibung

Die Erfindung betrifft eine Getränkezubereitungsvorrichtung gemäß dem Oberbegriff des Anspruchs 1, insbesondere eine Portionskapselvorrichtung oder einen Kaffeevollautomaten, mit einem sich entlang einer Tiefenachse, einer sich senkrecht zur Tiefenachse erstreckenden Breitenachse und einer sich senkrecht zur Tiefen- und Breitenachse erstreckenden, bevorzugt vertikalen, Hochachse erstreckenden Gerätegehäuse und einer, beispielsweise für den Fall der Realisierung der Getränkezubereitungsvorrichtung als Portionskapselvorrichtung als Injektionseinrichtung zum Injizieren von kaltem und/oder warmem Wasser in eine Portionskapsel oder im Falle der Realisierung der Getränkezubereitungsvorrichtung als Kaffeevollautomat als Brüheinheit ausgebildeten, Getränkezubereitungseinrichtung zum Zubereiten eines Getränks auf Basis eines Getränkesubstrates, mit einem auf einer Frontseite des Gerätegehäuses angeordneten Auslass zum Ausleiten des zubereiteten Getränks sowie mit einer mindestens einen Standfuß aufweisenden, entnehmbaren Tropfschale, die in einer Funktionsposition mit einem, vorzugsweise ein Abtropfgitter tragenden, Getränkebehältnisabstellabschnitt in einem Bereich außerhalb des Gerätegehäuses unterhalb des Auslasses derart angeordnet ist, dass sie dabei mit einem Innenabschnitt in einer frontseitigen Gehäuseaussparung hineinragt, und die in einer aus dem Gerätegehäuse heraus verstellten Entnahmeposition mit dem mindestens einen Standfuß auf einer, insbesondere horizontalen, Aufstellfläche, die sich bevorzugt senkrecht zur Hochachse erstreckt, abstellbar ist, wobei der zumindest eine Standfuß derart angeordnet ist, dass dieser in der Funktionsposition innerhalb einer bezogen auf die Gerätegehäusehochachse axialen Projektionsfläche des Gerätegehäuses sowie unterhalb oder innerhalb des Gerätegehäuses angeordnet ist.

Aus der DE 38 43 702 C2 ist eine als Espressomaschine ausgebildete Getränkezubereitungsvorrichtung bekannt, die eine Tropfschale aufweist, die mit mehreren Standfüßen auf einer Aufstellfläche aufsteht, und zwar sowohl in ihrer am Gerätegehäuse angeordneten Funktionsposition als auch in einer Entnahmeposition. Die Standfüße der Tropfschale der bekannten Getränkezubereitungsvorrichtung sind dabei so angeordnet, dass diese seitlich an dem Gerätegehäuse der Getränkezubereitungsvorrichtung vorbeischiebbar sind und auch in der Funktionsposition sich seitlich des Gerätegehäuses sowie auf der Aufstellfläche befinden. Nachteilig hierbei ist, dass die Tropfschale zwingend breiter sein muss als das Gerätegehäuse. Ferner wird als nachteilig empfunden, dass die Tropfschale in der Funktionsposition vergleichsweise hoch aufbaut, was auch dazu führt, dass das Gerätegehäuse entsprechend hoch dimensioniert sein muss, um einen ausreichenden Abstand zwischen dem frontseitigen Auslass und einem auf der Tropfschale abgestellten Getränkebehältnis zu gewährleisten.

Zum weiteren Stand der Technik werden die US 7,997,187 B2, die US 6,766,729 B2, die US 2012/0186457 A1 und die US 2009/0236364 A1 genannt.

Ausgehend von dem vorgenannten Stand der Technik liegt der Erfindung die Aufgabe zugrunde, eine alternative Getränkezubereitungsvorrichtung anzugeben, die hinsichtlich der Breitengestaltung der Tropfschale einen größeren Gestaltungsspielraum erlaubt, insbesondere derart, dass die Tropfschale weniger breit ausgestaltet werden kann als das Gerätegehäuse und trotzdem sichergestellt ist, dass die Tropfschale stabil, d.h. ohne zu verkippen, im aus dem Gerätegehäuse entnommenen Entnahmezustand auf dem mindestens einen Standfuß, vorzugsweise den mehreren Standfüßen, auf einer bevorzugt horizontalen Aufstellfläche abstellbar ist. Besonders bevorzugt soll die Tropfschale auch im Hinblick auf eine möglichst geringe Höhenerstreckung optimiert sein.

Diese Aufgabe wird mit einer Getränkezubereitungsvorrichtung mit den Merkmalen des Anspruchs 1 gelöst.

Vorteilhafte Weiterbildungen der Erfindung sind in den Unteransprüchen angegeben.

Der Erfindung liegt der Gedanke zugrunde, den mindestens einen Standfuß derart an der Tropfschale anzuordnen und vorzugsweise einteilig, insbesondere im Kunststoffspritzgussverfahren mit dieser auszubilden, dass der Standfuß, wenn sich die Tropfschale in ihrer am Gerätegehäuse angeordneten Funktionsposition befindet, unterhalb oder innerhalb des Gerätegehäuses angeordnet ist und nicht seitlich benachbart zu diesem, so dass die Tropfschale nicht, jedenfalls nicht zwingend, seitlich in Richtung der Breitenachse der Getränkezubereitungsvorrichtung überstehen muss. Bevorzugt ist dabei der Standfuß derart angeordnet, dass dessen (untere) Standfläche unterhalb eines Wannenbodens einer in der Tropfschale ausgebildeten Wanne zum Auffangen von Getränkeresten, Spülwasser und der gleichen Flüssigkeiten aus einem Getränkezubereitungsprozess angeordnet ist. Dabei ist es besonders bevorzugt, wenn der mindestens eine Standfuß, vorzugsweise die mehreren, insbesondere zwei Standfüße mit Seitenabstand entlang der Breitenachse des Gerätegehäuses zu den sich entlang der Tiefenachse erstreckenden unteren Seitenkanten des Gerätegehäuses angeordnet ist bzw. sind und der mindestens eine Standfuß zu einer Gerätemitte hin versetzt angeordnet ist.

Die erfindungsgemäße Ausgestaltung der Getränkezubereitungsvorrichtung ermöglicht die Realisierung von prinzipiell beliebig breiten bzw. schmalen Tropfschalen und stellt gleichzeitig sicher, dass die Tropfschale in ihrer Entnahmeposition, d.h. außerhalb des Gerätegehäuses mittels des einen Standfußes derart auf einer Aufstellfläche abstellbar ist, dass die bevorzugt eine größere Längenerstreckung entlang der Tiefenachse als Breitenerstreckung entlang der Breitenachse aufweisende Tropfschale sicher auf der Aufstellfläche steht, ohne dass die Tropfschale kippt und dadurch Flüssigkeit austritt.

Wie eingangs erwähnt, gewährleistet der mindestens eine Standfuß eine stabile, im Wesentlichen horizontal ausgerichtete Positionierung der Tropfschale auf eine Aufstellfläche durch Abstellen auf dem mindestens einen Standfuß, ohne dass die Tropfschale verkippt. Dabei ist das Vorsehen und die Anordnung des mindestens einen Standfußes insbesondere dann von Vorteil, wenn die Tropfschale (in Richtung der Tiefenerstreckung des Gerätegehäuses in der Funktionsposition) langgestreckt ausgebildet ist und neben einem, vorzugsweise zumindest größtenteils, weiter bevorzugt vollständig an dem Getränkebehältnisabstellabschnitt ausgebildeten Hochwannenabschnitt einen, bevorzugt einteilig mit diesem ausgebildeten, bevorzugt zumindest größtenteils, ganz besonders bevorzugt vollständig an dem Innenabschnitt ausgebildeten Flachwannenabschnitt aufweist. Der Begriff Hochwannenabschnitt bedeutet dabei, dass dieser tiefer ausgestaltet ist, d.h. eine größere Erstreckung entlang der Hochachse aufweist als der Flachwannenabschnitt, was bevorzugt zu einer in der Seitenansicht gestuften Anordnung von Flachwannenabschnitt und Hochwannenabschnitt führt - der Flachwannenabschnitt ist dabei weiter von einer Aufstellfläche sowie Standfläche des Gerätegehäuses beabstandet als der Hochwannenabschnitt. Besonders zweckmäßig ist es nun, wenn in Weiterbildung der Erfindung der Flachwannenabschnitt eine größere Erstreckung entlang der Tiefenerstreckung aufweist, er also länger ist als der Hochwannenabschnitt, so dass ohne das Vorsehen des erfindungsgemäßen Standfußes aufgrund der Schwerpunktposition die Tropfschale nach dem Entnehmen bzw. Überführen in die Entnahmeposition über einen großen Neigungs- bzw. Kippwinkel verkippen und Flüssigkeit aus dem Wannenabschnitt austreten bzw. überschwappen würde. Zur Gewährleistung eines sicheren Standes einer derartig ausgebildeten Tropfschale in der Entnahmeposition befindet sich der mindestens eine Standfuß, (d.h. zumindest diese Standfläche), erfindungsgemäß unterhalb des Flachwannenabschnitts.

Erfindungsgemäß ist weiterhin vorgesehen, dass der mindestens eine Standfuß an dem Hochwannenabschnitt angeordnet ist, insbesondere einteilig mit diesem ausgebildet ist und sich entlang der Tiefenachse bis unter den Flachwannenabschnitt erstreckt. Dabei ist es besonders zweckmäßig, wenn der Standfuß sich ausgehend von einer Rückwand des Hochwannenabschnitts erstreckt bzw. dort angedockt ist bzw. seinen Ursprung hat. Eine solche Ausführungsform ermöglicht es nämlich, den Standfuß entlang der Hochachse von einem Flachwannenabschnittsboden zu beabstanden, was in Weiterbildung der Erfindung vorgesehen ist. Besonders zweckmäßig ist es, wenn sich der mindestens eine Standfuß nicht unmittelbar ausgehend von der Unterseite des Flachwannenabschnitts entlang der Hochachse nach unten erstreckt.

In einen solchen, vorbeschriebenen Abstand entlang der Hochachse zwischen dem Standfuß und dem Flachbodenabschnitt kann nämlich, wiederum in einer Weiterbildung der Erfindung, in der Funktionsposition, ein bevorzugt als horizontaler Flachabschnitt ausgebildeter, unterer Gerätegehäuseabschnitt aufgenommen werden. Anders ausgedrückt ermöglicht es das Vorsehen des vorerwähnten Abstandes die Tropfschale derart in die Gerätegehäuseaussparung einzuschieben, dass bei diesem Einschubvorgang der vorerwähnte untere Gerätegehäuseabschnitt in dem Abstandsbereich zwischen dem Flachwannenbodenabschnitt und einer Oberseite des mindestens einen Standfußes aufgenommen wird, insbesondere derart, dass sich der Flachwannenabschnittsboden beim Einschieben in der Gerätegehäuseaussparung von oben an dem vorerwähnten unteren Gerätegehäuseabschnitt abstützt, insbesondere derart, dass der mindestens eine Standfuß, bevorzugt die gesamte Tropfschale, von einer Aufstellfläche abhebt und dadurch die Standfläche des Standfußes, vorzugsweise die gesamte Tropfschale, wie eingangs erwähnt, von der Aufstellfläche sowie der Standfläche des Gerätegehäuses entlang der Hochachse beabstandet wird. Zusätzlich oder alternativ können auch andere Abstützmöglichkeiten für die Tropfschale zum Anheben der Tropfschale beim Einschubvorgang zur Beabstandung der Standfläche des Standfußes von der Standfläche des Gerätegehäuses vorgesehen sein.

Bevorzugt steht die Tropfschale in der Entnahmeposition zusätzlich zu dem mindestens einen in der Funktionsposition unterhalb oder innerhalb des Gerätegehäuses angeordneten Standfuß mit mindestens einer weiteren, vorzugsweise entlang der Tiefenachse zu dem Standfuß beabstandeten, bevorzugt an dem Getränkebehältnisabschnitt ausgebildeten Standfläche auf der Aufstellfläche auf. Bevorzugt können hierzu an der Tropfschale, insbesondere an der Unterseite eines später noch zu erläuternden Hochwannenabschnitts entsprechende Standflächen, bevorzugt Standflächenpunkte vorgesehen sein.

Grundsätzlich ist eine Ausführungsform der Getränkezubereitungsvorrichtung realisierbar, bei der der mindestens eine Standfuß sowohl in der Funktionsposition als auch in der Entnahmeposition Kontakt zu einer Aufstellfläche für die Getränkezubereitungsvorrichtung hat, also der Standfuß sowohl in der Funktionsposition als auch in der Entnahmeposition sich mit seiner Standfläche auf Höhe der Standfläche der Getränkezubereitungsvorrichtung befindet. Besonders bevorzugt ist jedoch eine Ausgestaltungsvariante, bei der der mindestens eine Standfuß lediglich in der Entnahmeposition auf einer Aufstellfläche für die Getränkezubereitungsvorrichtung angeordnet ist, also sich die Standfläche des Standfußes in einer gemeinsamen Ebene mit der Standfläche der Getränkezubereitungsvorrichtung befindet, während in der Funktionsposition die (untere) Standfläche des Standfußes entlang der Hochachse von der Standfläche der Getränkezubereitungsvorrichtung und damit der Aufstellfläche beabstandet ist. Diese Ausgestaltungsform ermöglicht es die Tropfschale in der Funktionsposition nach unten hin innerhalb der Getränkezubereitungsvorrichtung abzustützen.

Bevorzugt ist der Abstand der Standfläche des Standfußes in der Funktionsposition entlang der Hochachse von der Standfläche des Gerätegehäuses gering, um eine große Neigung bzw. eine große Verkippbewegung der Tropfschale beim Entnehmen zu verhindern. Bevorzugt beträgt der Abstand der Standfläche des Standfußes von der Abstellfläche bzw. der Standfläche des Gerätegehäuses in der Funktionsposition weniger als 5 mm, insbesondere zwischen 0,05 mm und 3 mm. Besonders zweckmäßig ist es, wenn ein Neigungswinkel, um den die Tropfschale bei der Entnahme aus der Funktionsposition in die Entnahmeposition bis zum Aufstehen auf dem mindestens einen Standfuß zurücklegen muss geringer ist als 5°, noch weiter bevorzugt geringer ist als 3°.

Grundsätzlich ist eine Ausführungsform der Getränkezubereitungsvorrichtung realisierbar, bei der nur die Standfüße in der Funktionsposition entlang der Hochachse von der Standfläche des Gerätegehäuses bzw. der Aufstellfläche beabstandet sind und die Tropfschale weiterhin außerhalb des Gerätegehäuses mit einer entsprechenden Standfläche, insbesondere mit mindestens einem Standpunkt, insbesondere zwei Standpunkten, auf der Aufstellfläche aufsteht. Besonders bevorzugt ist jedoch eine alternative Variante, bei der die gesamte Tropfschale in der Funktionsposition, d.h. nicht nur die Standfüße bzw. die Standflächen der Standfüße, sondern auch weitere Standflächen, insbesondere Standpunkte der Tropfschale, insbesondere des Getränkebehälterabstellabschnitts von der Aufstellfläche beabstandet ist, so dass die Tropfschale vollständig von dem Gerätegehäuse getragen ist und sich nicht unmittelbar selbst auf der Aufstellfläche abstützt.

Ganz besonders bevorzugt ist eine Ausführungsform der Getränkezubereitungsvorrichtung mit einem mehrteiligen Gehäuse, welches einen Gerätesockel aufweist, auf welchen ein (großvolumigeres und bevorzugt die eigentliche Gerätetechnik, d.h. eine Injektions- oder Brüheinrichtung beinhaltendes) Hauptgeräteteil angeordnet ist. Hierdurch kann die Gertränkezubereitungsvorrichtung bis auf den Sockel und die Tropfschale einer üblichen, insbesondere kleinen und für den Heimbereich ausgelegten Getränkezubereitungsvorrichtung entsprechen, die durch das Vorsehen des Sockels und der erfindungsgemäßen Tropfschale auf einfache Weise umgerüstet werden kann für Mehr-Getränkebezugsanwendungen, beispielsweise für den Bürobereich, die eine größere Tropfschale benötigen. Bei einer derartigen Konfiguration entspricht der Gehäuseabschnitt, der durch den Sockel von der Aufstellfläche abgehoben ist und in einem Bereich zwischen dem mindestens einen Standfuß und dem Flachwannenbodenabschnitt aufgenommen werden kann bei einer Getränkezubereitungsvorrichtung (ohne Sockel) für die Heimanwendung einem Gerätegehäuseboden. Durch das Anheben dieses Bodens mittels des Sockels wird Raum geschaffen für die erfindungsgemäße Tropfschale, die großvolumiger ausgestaltet werden kann, um somit das gleiche Grundgerät für unterschiedliche Anwendungen zu konfigurieren.

Trotz der erfindungsgemäßen Weiterbildung des Abstützens des Flachwannenbodenabschnittes auf einem unteren Gerätegehäuseabschnitt und einer damit bevorzugt verbundenen Beabstandung der Standfläche des Standfußes, bevorzugt der gesamten Tropfschale, von der Aufstellfläche ist, um ein im Wesentlichen problemloses bzw. ruckelfreies Einschieben der Tropfschale in die Gerätegehäuseaussparung und/oder ein erleichtertes Fixieren in der Gerätegehäuseaussparung zu ermöglichen in Weiterbildung der Erfindung vorgesehen, dass entlang der Tiefenachse vor dem Innenwannenabschnitt noch ein, ggf. als Frontwannenabschnitt ausgebildeter Frontabschnitt vorgesehen ist, dessen Frontabschnittsboden entlang der Hochachse oberhalb des Innenwannenabschnittsboden angeordnet ist, so dass der Frontabschnittsboden, ohne die Tropfschale anheben zu müssen beim Einschieben der Tropfschale in die Gerätegehäuseaussparung automatisch oberhalb des vorerwähnten unteren Gerätegehäuseabschnittes gelangt. Durch weiteres Einschieben und einem bevorzugt vorgesehenen, insbesondere stetigen Übergang zwischen dem Frontbodenabschnitt und dem Innenwannenbodenabschnitt oder alternativ durch einen schräg entlang der Tiefenachse verlaufenden Flachwannenboden resultiert ein, insbesondere sanftes, geringfügiges Anheben der Tropfschale, derart, dass die Standfläche des Standfußes, bevorzugt die gesamte Tropfschale, von der Standfläche des Gerätegehäuses und damit von der Aufstellfläche in der Hochrichtung, insbesondere um weniger als 5 mm angehoben wird.

Zusätzlich oder alternativ zu dem Vorsehen eines Frontabschnitts kann der Flachwannenabschnittsbogen über seine Längenerstreckung entlang der Tiefachse T in Richtung vorderem (von dem Getränkebehältnisabstellabschnitt abgewandten) Ende der Tropfschale, insbesondere stetig, ansteigend ausgebildet sein, um ein ruckfreies Aufgleiten auf den unteren Gehäuseabschnitt zu ermöglichen.

Dem mindestens einen Standfuß ist bevorzugt eine nach unten offene oder alternativ unten geschlossene Ausrichteinschuböffnung zugeordnet, die zusammen mit dem mindestens einen Standfuß Ausrichtmittel zum Ausrichten der Tropfschale entlang der Breitenachse relativ zu dem Gerätegehäuse bildet. Hierzu verjüngt sich die Ausrichteinschuböffnung bevorzugt bezogen auf die Breitenerstreckung der Tiefenachse, so dass durch Wechselwirkung des Standfußes mit einer seitlichen Öffnungsbegrenzung eine (Fein-)Zentrierung bzw. Ausrichtung der Tropfschale in Richtung der Breitenerstreckung des Gerätegehäuses einhergeht.

Grundsätzlich ist es ausreichend, wenn die Tropfschale einen einzigen in der Funktionsposition unterhalb oder innerhalb des Gerätegehäuses angeordneten Standfuß aufweist, insbesondere wenn dieser mittig bezogen auf die Breitenerstreckung angeordnet ist und bevorzugt eine ausreichend breite Standfläche aufweist. Vorteilhafter ist jedoch eine Ausgestaltungsform mit mindestens zwei, vorzugsweise ausschließlich zwei, solcher in Richtung der Breitenerstreckung entlang der Breitenachse beabstandeten Standfüßen, insbesondere dann, wenn wie später noch erläutert werden wird, Rastmittel zum verrastenden Fixieren der Tropfschale an dem Gerätegehäuse vorgesehen sein sollen, da diese dann in einem Bereich zwischen den Standfüßen angeordnet werden können, insbesondere im Bereich einer Breitenmitte der Tropfschale.

Wie zuvor bereits angedeutet, ist es besonders zweckmäßig, wenn die Tropfschale mithilfe von Rastmitteln in der Funktionsposition an dem Gerätegehäuse fixiert ist. Es ist eine Ausführungsform von besonderem Vorteil, bei der die Rastmittel zum Erzeugen einer Anzugskraft zum selbsttätigen Anziehen der Tropfschale über eine Verstellstrecke in die Funktionsposition hineingebildet sind, wobei die Verstellstrecke bevorzugt mindestens 1 mm, weiter bevorzugt mindestens 2 mm, ganz besonders bevorzugt zwischen 2 mm und 4 mm beträgt. Besonders bevorzugt ist es also, wenn die Rastmittel, insbesondere nach dem zunächst manuellen Verstellen der Tropfschale in Richtung Gerätegehäuse, insbesondere entlang der Tiefenachse und dabei Vorspannen von Federmitteln der Rastmittel die in den Rastmitteln gespeicherte Federkraft umwandeln in eine Kraftkomponente, die die Tropfschale in Richtung Gerätegehäuse anzieht bzw. bewegt, auch nach Loslassen der Tropfschale, d.h. ohne einen notwendigen zusätzlichen manuellen Eingriff. Somit wird also der letzte Verstellweg bzw. die letzte Verstellstrecke von der Tropfschale durch Vollendung des Rastvorganges automatisch überwunden und die Tropfschale automatisch in die Raststellung bzw. die Funktionsposition überführt. Die Bedienung einer derartigen Getränkezubereitungsvorrichtung ist äußerst komfortabel und die spezielle Ausgestaltung der Rastmittel stellt zudem sicher, dass die Tropfschale in jedem Fall ordnungsgemäß fixiert wird, so dass Fehlbedienungen oder ein versehentliches Verstellen der Tropfschale durch insbesondere seitliche Krafteinwirkungen aus der Funktionsposition heraus vermieden wird. Bevorzugt erzeugen die Rastmittel auch noch in der Rastposition eine Anzugskraft auf die Tropfschale.

Ganz besonders bevorzugt ist es dabei, wenn die Rastmittel mindestens einen, vorzugsweise in Richtung der Tiefenerstreckung weisenden Federarm aufweisen, insbesondere ein Federarmpaar zur Wechselwirkung mit einer entsprechenden Gegenfläche des Gerätegehäuses, wobei der mindestens eine Federarm besonders bevorzugt an der Tropfschale angeordnet ist, insbesondere in einem Bereich entlang der Breitenachse zwischen zwei Standfüßen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine perspektivische Schrägansicht einer als Kaffeevollautomat ausgebildeten Getränkezubereitungsvorrichtung mit Gerätegehäuse und Tropfschale,
- Fig. 2: eine Schrägansicht der Tropfschale (ohne Abtropfgitter) von oben,
- Fig. 3: eine Schrägansicht der Tropfschale von unten,
- Fig. 4: eine geschnittene Längsschnittansicht der Tropfschale entlang einer Tiefenachse,
- Fig. 5: in einer geschnittenen Ansicht einen Ausschnitt der Tropfschale in ihrer Funktionsposition, und
- Fig. 6: die in der Funktionsposition befindliche Tropfschale gesamt Gerätegehäuse in einer Ansicht von unten.

In den Figuren sind gleiche Elemente und Elemente mit der gleichen Funktion mit den gleichen Bezugszeichen gekennzeichnet.

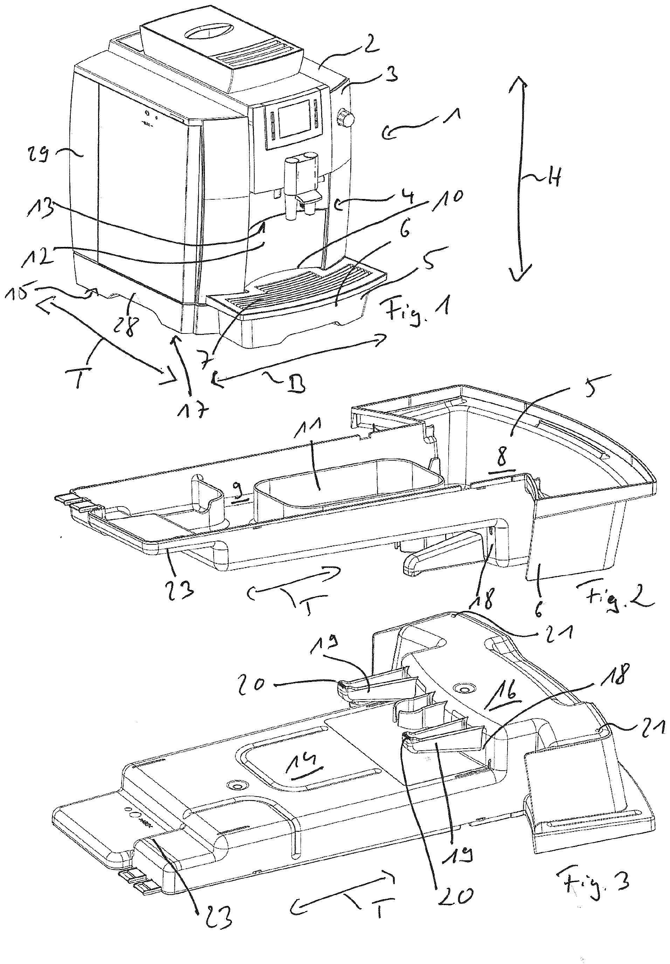

In Fig. 1 ist in einer perspektivischen Ansicht eine Getränkezubereitungsvorrichtung 1 gezeigt, die hier beispielhaft als Getränkevollautomat, umfassend einen Bohnenbehälter, ein Mahlwerk sowie eine eine Brühkammer aufweisende Getränkezubereitungseinrichtung (nicht gezeigt) ausgebildet ist. Die Getränkezubereitungsvorrichtung 1 umfasst ein Gerätegehäuse 2 mit einer Frontseite 3, auf der ein Auslauf 4 zum Ausleiten von fertigem Getränk angeordnet ist.

Das Gerätegehäuse 2 erstreckt sich entlang an einer bei ordnungsgemäßer Aufstellung der Getränkezubereitungsvorrichtung 1 auf einer horizontalen Aufstellfläche vertikalen Hochachse H, entlang einer sich senkrecht dazu erstreckenden Tiefenachse B sowie einer sich senkrecht zur Hochachse H und der Tiefenachse T erstreckenden Breitenachse B. Die Tiefenachse T erstreckt sich dabei im Wesentlichen senkrecht zur Flächenerstreckung der Frontseite 3 sowie parallel zur Aufstellfläche 17.

Zu erkennen ist, dass vor der Frontseite 3 des Gerätegehäuses 2 ein Getränkebehältnisabstellabschnitt 5 einer Tropfschale 6 angeordnet ist. Der Getränkebehälnisabstellabschnitt 5 der Tropfschale 5 trägt ein Abtropfgitter zum Aufstellen eines Getränkebehältnisses, wobei sich das Abtropfgitter 7 entlang der Hochrichtung H mit Abstand unterhalb des Auslaufs 4 vor dem Gerätegehäuse 2 bzw. vor der Frontseite 3 befindet.

In den Figuren 2 und 3 ist die Tropfschale 6 einmal von schräg oben und einmal von schräg unten gezeigt. Zu erkennen ist in der Zeichnungsebene rechts der Getränkebehältnisabstellabschnitt 5, hier dargestellt ohne Abtropfgitter 7, unter welchem sich ein gezeigter Hochwannenabschnitt 8 befindet, der eine größere Höhenerstreckung entlang der Hochachse H aufweist, d.h. tiefer bemessen ist als ein unmittelbar entlang der Tiefenachse T daran angrenzender Flachwannenabschnitt 9, der sich in der in Fig. 1 gezeigten Funktionsposition innerhalb einer frontseitigen Gehäuseaussparung 10 innerhalb des Gerätegehäuses befindet. Zu erkennen ist, dass in dem Flachabschnitt 9 eine Tresterbehälter-Aufnahme 11 bzw. ein Aufnahmerahmen für einen Tresterbehälter oder alternativ für den Fall der Ausbildung der Getränkezubereitungsvorrichtung 1 als Portionskapselmaschine für leere Portionskapseln angeordnet ist. Der Tresterbehälter steht auf der Aufnahme 11 auf, deren umlaufender Kragen dafür Sorge trägt, dass der Tresterbehälter nicht nass wird. Der nicht dargestellte Behälter kann über eine in Fig. 1 gezeigte Schublade 12 entnommen werden. Die Schublade 12 befindet sich in einer Schubladenaussparung 13 in der Fronseite 3 des Gerätegehäuses 2 oberhalb des Abtropfgitters 7. Die Schublade 12 wird durch Herausziehen der Tropfschale 6 automatisch mit dieser zusammen aus dem Gerätegehäuse entnommen (mechanische Kopplung).

Wie sich insbesondere aus Fig. 2 ergibt, ist der Flachwannenabschnitt 9 flacher, d.h. weniger tief entlang der Hochachse H bemessen als der Hochwannenabschnitt, wodurch ein Flachwannenabschnittboden 14 weiter von einer Standfläche 15 (vgl. Fig. 1) des Gerätegehäuses beabstandet ist als ein Hochwannenabschnittboden 16.

Mit ihrer Standfläche 15 steht das Gerätegehäuse 2 auf einer bevorzugt horizontalen Abstellfläche 17 auf.

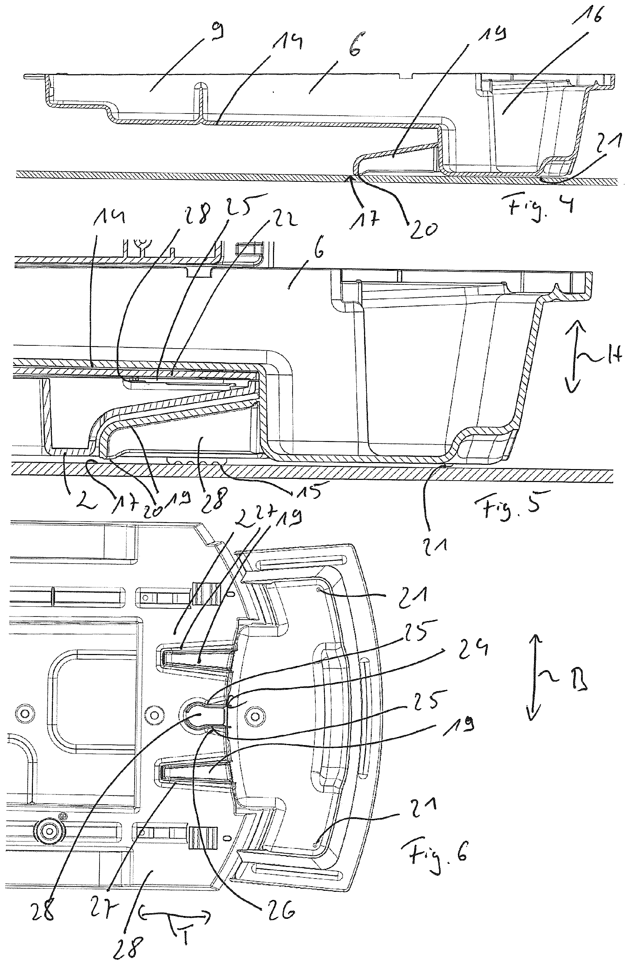

Aus den Fig. 2 und 3 ist zu erkennen, dass aus einer Rückwand 18 des an dem Getränkebehälterabstellabschnitt 5 der Tropfschale 6 ausgebildeten Hochwannenabschnitt 16 zwei langgestreckte Standfüße 19 angeordnet sind, sie sich ausgehend von der Rückwand 18 entlang der Tiefenachse T bis in einen Bereich unterhalb des Flachwannenabschnittes 14 erstrecken und sich somit, wie sich aus Fig. 5 ergibt, in der Funktionsposition innerhalb einer bezogen auf die Gerätegehäusehochachse H axialen Projektionsfläche des Gehäuses sowie in dem gezeigten Ausführungsbeispiel unterhalb des Gerätegehäuses befinden. Für den Fall, dass sich das Gerätegehäuse mit einer Bodenfläche noch über einen Bereich unterhalb der Standfüße 19 erstrecken würde, würden sich die Standfüße 19 innerhalb des Gehäuses befinden, was alternativ realisierbar ist.

Die Standfüße 19 weisen jeweils eine entlang der Hochachse H von dem Flachabschnittboden 14 beabstandete Standfläche 20 auf, mit welcher sie in einer in Fig. 4 gezeigten Entnahmeposition auf einer, hier horizontalen Abstellfläche 17 abstellbar sind bzw. aufstehen. Zusätzlich steht die Tropfschale 6 in der Entnahmeposition auf zwei beispielhafte Standpunkte 21 ausgestatteten weiteren Standflächen auf, die unterhalb des Hochwannenabschnittbodens 16 angeordnet sind.

In der in Fig. 5 gezeigten Funktionsposition ist die Tropfschale 6 vollständig von der Abstellfläche 17 in der Hochrichtung H abgehoben, d.h. zu dieser beabstandet, d.h. die unterhalb des Gerätegehäuses angeordneten Standflächen 20 der Standfüße 19 weisen in der Hochrichtung H von der Abstellfläche 17 und damit von der Standfläche 15 des Gerätegehäuses 2 einen Abstand entlang der Hochachse H auf, hier von etwas mehr als 1 mm. Ebenso sind die Standpunkte 21 ein Stück weit der Hochachse H von der Abstellfläche 17 beabstandet. Bei einer alternativen Ausgestaltungsvariante (nicht gezeigt) kann die Tropfschale 6 auch in der Funktionsposition mit den Standpunkten 21 auf der Abstellfläche 17 aufstehen.

Um die Tropfschale 6 in der Funktionsposition von der Abstellfläche 17 zu beabstanden liegt die Tropfschale 6 in der Funktionsposition mit ihrem Flachwannenabschnittboden 14 auf einem unteren, flachen Gehäuseabschnitt 22 des Gerätegehäuses 2 auf bzw. wird auf diesen beim Einschiebevorgang aufgeschoben.

Der untere Gehäuseabschnitt 22 befindet sich dann auch, wie in Fig. 5 gezeigt, in der Funktionsposition innerhalb eines Abstandsbereichs zwischen den Standfüßen 19 und dem Flachwannenabschnitt 14.

Bei dem gezeigten, bevorzugten Ausführungsbeispiel der Getränkezubereitungsvorrichtung 1 ist das Gerätegehäuse 2 mehrteilig ausgebildet. In diesem Zusammenhang wird nochmals auf Fig. 1 verwiesen. Wesentlich ist dabei, dass das Gerätegehäuse einen Gerätegehäusesockel (im Folgenden Sockel 28) umfasst, der die Standfläche 15 des Gerätegehäuses bildet, mit welcher das Gerätegehäuse 2 über dessen Sockel 28 auf der Aufstellfläche 17 aufsteht. Der Sockel 28 ist, insbesondere lösbar mit dem darüber befindlichen Hauptgehäuseteil 29 verbunden, beispielsweise durch Verrasten und/oder Verschrauben. Das Vorsehen des Sockels 28 ermöglicht es eine Getränkezubereitungsvorrichtung geringerer Höhe, wie diese beispielsweise im Heimbereich eingesetzt wird, aufzustocken und mit einer erfindungsgemäßen Tropfschale zu versehen, indem diese dann den flachen bzw. unteren Gehäuseabschnitt 22, der bei der herkömmlichen Getränkezubereitungsvorrichtung ohne Sockel einen Boden einer Geräteaussparung bildet, zwischen sich aufzunehmen. Insbesondere kann somit eine großvolumigere (erfindungsgemäße) Tropfschale eingesetzt werden, wie diese beispielsweise für Büroanwendungen bzw. größere Getränkebezugszahlen benötigt wird.

Aus Fig. 2 ist zu entnehmen, dass sich entlang der Längserstreckung der Tropfschale 6 in Richtung der Tiefenachse T vor dem Flachwannenabschnitt 14 noch ein teilweise ebenfalls als Wanne ausgebildeter Frontabschnitt befindet, zum leichteren Finden der Gehäuseaussparung 10.

Aus einer Zusammenschau der Fig. 3 und 6 ist zu entnehmen, dass der Tropfschale 6 Rastmittel 24 zugeordnet sind, die derart ausgebildet sind, dass sie auf dem letzten Weg der Verstellbewegung der Tropfschale in die Gehäuseaussparung 10 hinein eine Anzugskraft erzeugen, die die Tropfschale 6 selbsttätig ein Stück weit bis in die Rast- bzw. Funktionsposition überführt. Hierzu umfassen die Rastmittel 2, als Paar angeordnete Federarme 25, die sich ausgehend von der Rückwand 18 entlang der Tiefenachse T erstrecken. Den Federarmen 25 ist eine gemeinsame, frontseitig offene Rastausnehmung 26 zugeordnet, die gleichzeitig noch als Zentrierung dient und die sich in ein einem ersten bzw. vorderen , d.h. näher an der Fronseite angeordneten Abschnitt entlang der Tiefenachse T verjüngt, wodurch die Federarme 25 radial nach innen verstellt und dabei gespannt werden.

Nach Überschreiten eines Engpasses weitet sich die Rastausnehmung 26 wieder auf und die Federarme kommen in Wechselwirkung mit den sich erweiternden Flächen der Rastausnehmung 26, wodurch sich die Federarme 25 durch radiales Aufweiten selbsttätig entspannen können, wobei diese Federkraft aufgrund der Wechselwirkung der Schrägflächen umgewandelt wird in eine die Tropfschale 6 anziehende Anzugskraft.

Aus Fig. 6 ist weiter zu entnehmen, dass den Standfüßen 19 in dem Gerätegehäuse 2, genauer in der Unterseite des Gerätegehäuses 2 jeweils eine Ausrichteinschuböffnung 27 zugeordnet ist, die zusammen mit dem jeweils zugeordneten Standfuß 19 Ausrichtmittel bilden, da sich die Seitenflächen der Ausrichteinschuböffnungen entlang der Tiefenachse T verjüngen und sich somit die Tropfschale 6 beim Einschieben der Standfüße 19 in die Ausrichteinschuböffnungen entlang der Breitenachse B zentriert.

### Bezugszeichenliste

- 1: Getränkezubereitungsvorrichtung
- 2: Gerätegehäuse
- 3: Frontseite
- 4: Auslauf
- 5: Getränkebehältnisabstellabschnitt
- 6: Tropfschale
- 7: Abtropfgitter
- 8: Hochwannenabschnitt
- 9: Flachwannenabschnitt
- 10: Gehäuseaussparung
- 11: Aufnahme
- 12: Schublade
- 13: Schubladenaussparung
- 14: Flachwannenabschnittboden
- 15: Standfläche des Gerätegehäuses
- 16: Hochwannenabschnittboden
- 17: Aufstellfläche für das Gerätegehäuse
- 18: Rückwand
- 19: Standfüße bzw. Standfuß
- 20: Standfläche des Standfußes/der Standfüße
- 21: Standpunkte (weitere Standflächen der Tropfschale)
- 22: Gehäuseabschnitt
- 23: Frontabschnitt
- 24: Rastmittel
- 25: Federarm
- 26: Rastausnehmung
- 27: Ausrichteinschuböffnung
- 28: Sockel
- 29: Hauptgehäuseteil
- T: Tiefenachse
- H: Hochachse
- B: Breitenachse

## Patentansprüche

1. Getränkezubereitungsvorrichtung, insbesondere Portionskapselvorrichtung oder Kaffeevollautomat, mit einem sich entlang einer Tiefenachse (T), einer sich senkrecht zur Tiefenachse (T) erstreckenden Breitenachse (B) und einer sich senkrecht zur Tiefen- und Breitenachse (T, B) erstreckenden Hochachse (H) erstreckenden Gerätegehäuse (2) und einer Getränkezubereitungseinrichtung zum Zubereiten eines Getränkes auf Basis eines Substrates, mit einem auf einer Frontseite (3) des Gerätegehäuses (2) angeordneten Auslass zum Ausleiten des zubereiteten Getränkes sowie mit einer mindestens einen Standfuß (19) aufweisenden, entnehmbaren Tropfschale (6), die in einer Funktionsposition mit einem, vorzugsweise ein Abtropfgitter (7) tragenden, Getränkebehältnisabstellabschnitt (5) in einem Bereich außerhalb des Gerätegehäuses (2) unterhalb des Auslasses derart angeordnet ist, dass sie dabei mit einem Innenabschnitt in eine frontseitige Gehäuseaussparung (10) hineinragt, und die in einer aus dem Gerätegehäuse (2) heraus verstellen Entnahmeposition auf dem mindestens einen Standfuß (19) abstellbar ist, wobei der mindestens eine Standfuß (19) derart angeordnet ist, dass dieser in der Funktionsposition innerhalb einer bezogen auf die Gerätegehäusehochachse axialen Projektionsfläche des Gerätegehäuses (2) sowie unterhalb oder innerhalb des Gerätegehäuses (2) angeordnet ist,
**dadurch gekennzeichnet,**
**dass** die Tropfschale (6) einen äußeren, vorzugsweise zumindest größtenteils an dem Getränkebehältnisabstellabschnitt (5) ausgebildeten, Hochwannenabschnitt (8) und einen, bevorzugt einteilig mit diesem ausgebildeten, bevorzugt zumindest größtenteils an dem Innenabschnitt ausgebildeten Flachwannenabschnitt (9) aufweist, der bevorzugt eine größere Erstreckung entlang der Tiefenachse (T) aufweist als der Hochwannenabschnitt (8), und dass der mindestens eine Standfuß (19) unterhalb des Flachwannenabschnitts (9) angeordnet ist, und dass der mindestens eine Standfuß (19) sich ausgehend von dem Hochwannenabschnitt (8) entlang der Tiefenachse (T) bis unter den Flachwannenabschnitt (9) erstreckt.

2. Getränkezubereitungsvorrichtung nach Anspruch 1,
**dadurch gekennzeichnet,**
**dass** der mindestens eine Standfuß (19) mit Seitenabstand entlang der Breitenachse (B) zu sich entlang der Tiefenachse (T) erstreckenden unteren Seitenkanten des Gerätegehäuses (2) angeordnet ist.

3. Getränkezubereitungsvorrichtung nach einem der Ansprüche 1 oder 2,
**dadurch gekennzeichnet,**
**dass** der mindestens eine Standfuß (19) derart angeordnet ist, dass dessen Standfläche (20), und bevorzugt die gesamte Tropfschale (6), in Funktionsposition entlang der Hochachse (H) von einer Standfläche (15) des Gerätegehäuses (4) und somit von einer Aufstellfläche (17) für das Gerätegehäuse (4) beabstandet ist.

4. Getränkezubereitungsvorrichtung nach einen der vorhergehenden Ansprüche,
**dadurch gekennzeichnet,**
**dass** der mindestens eine Standfuß (19) entlang der Hochachse (H) von einen Flachwannenabschnittsboden (14) beabstandet ist.

5. Getränkezubereitungsvorrichtung nach Anspruch 4,
**dadurch gekennzeichnet,**
**dass** ein, bevorzugt als horizontaler Flachabschnitt ausgebildeter, unterer Gehäuseabschnitt (22) in der Funktionsposition in einem Bereich entlang der Hochachse (H) zwischen dem mindestens einen Standfuß (19) und dem Flachwannenabschnittboden (14) aufgenommen ist.

6. Getränkezubereitungsvorrichtung nach Anspruch 5,
**dadurch gekennzeichnet,**
**dass** der Gehäuseabschnitt (22) über einen Gehäusesockel (28) des Gerätegehäuses (2), der sich unterhalb eines Hauptgehäuseteils (29) des Gerätegehäuses (2) befindet, von der Aufstellfläche (17) für das Gerätegehäuse 2 beabstandet ist.

7. Getränkezubereitungsvorrichtung nach einem der Ansprüche 5 oder 6,
**dadurch gekennzeichnet,**
**dass** der Flachwannenabschnittboden (14) beim Einschieben in die Gehäuseaussparung (10), insbesondere auf den Gehäuseabschnitt (22), abgestützt ist, und bevorzugt dadurch der mindestens eine Standfuß (19) entlang der Hochachse (H) von der Standfläche (15) des Gerätegehäuses (4) und damit von der Aufstellfläche (1) für das Gerätegehäuse (4) beabstandet ist.

8. Getränkezubereitungsvorrichtung nach einem der vorhergehenden Ansprüche,
**dadurch gekennzeichnet,**
**dass** in einer Einschubrichtung der Tropfschale (6) in die Gehäuseaussparung (10) entlang der Tiefenachse (T) vor dem Flachwannenabschnitt (14) ein Frontabschnitt (23) angeordnet ist, dessen Frontabschnittboden entlang der Hochachse (H) oberhalb des Flachwannenabschnittsbodens (14) angeordnet ist.

9. Getränkezubereitungsvorrichtung nach einem der vorhergehenden Ansprüche,
**dadurch gekennzeichnet,**
**dass** dem mindestens einen Standfuß (19) eine, bevorzugt nach unten offene, Ausrichteinschuböffnung (27) zugeordnet ist, die Zusammen mit dem Standfuß (19) Ausrichtmittel zum Ausrichten der Tropfschale (6) entlang der Breitenachse (B) relativ zu dem Gerätegehäuse (2) bildet.

10. Getränkezubereitungsvorrichtung nach einem der vorhergehenden Ansprüche,
**dadurch gekennzeichnet,**
**dass** die Tropfschale (6) zwei entlang der Breitenachse (B) beabstandete Standfüße (19) aufweist.

11. Getränkezubereitungsvorrichtung nach einem der vorhergehenden Ansprüche,
**dadurch gekennzeichnet,**
**dass** die Tropfschale (6) mit Hilfe von Rastmitteln (24) in der Funktionsposition an dem Gerätegehäuse (2) fixiert ist, wobei die Rastmittel (24) zum Erzeugen einer Anzugskraft zum selbsttätigen Anziehen der Tropfschale (6) über eine Verstellstrecke in die Funktionsposition ausgebildet sind.

12. Getränkezubereitungsvorrichtung nach Anspruch 11,
**dadurch gekennzeichnet,**
**dass** die Rastmittel (24) abschnittsweise, insbesondere mindestens ein Federarm (25) der Rastmittel (24), weiter bevorzugt ein Federarmpaar entlang der Breitenachse (B) zwischen zwei Standfüßen (19) angeordnet sind.

## Claims

1. Beverage preparation device, in particular portion capsule device or fully automatic coffee machine, with a device housing (2) extending along a depth axist, a width axis (B) extending perpendicular to the depth axist and a height axis (H) extending perpendicularly to the depth and width axis (T, B), and a beverage preparation device for preparing a beverage on the basis of a substrate, with an outlet arranged on a front side (3) of the device housing (2) for discharging the prepared beverage, as well as with a removable drip tray (6) having at least one stand (19), which is arranged in a functional position with a beverage container storage section (5), preferably carrying a drip grill (7), in an area outside of the device housing (2) underneath the outlet in such a way that here, with an inner section, it projects in a front-side housing recess (10), and which, in a removal position adjusted out of the device housing (2), can be placed on at least one stand (19), wherein the at least one stand (19) is arranged such that this is arranged in the functional position within an axial projected surface of the device housing relative to the device housing vertical axis as well as below or within the device housing (2),
**characterized in that**
the drip tray (6) comprises an outer, preferably at least in largely part formed on the beverage container storage section (5), high tray section (8) and a, preferably formed integrally therewith, preferably at least largely formed on the inner section, flat tray section (9), which preferably comprises a greater extension along the depth axis (T) than the high tray section (8), and that the at least one stand (19) is arranged below the flat tray section (9), and that the at least one stand (19) extends starting from the high tray section (8) along the depth axis (T) to below the flat tray section (9).

2. Beverage preparation device according to claim 1,
**characterized in that**
the at least one stand (19), with lateral distance along the width axis (B), is arranged to bottom lateral side edges of the device housing (2) extending along the depth axis (T).

3. Beverage preparation device according to one of the claims 1 or 2,
**characterized in that**
the at least one stand (19) is arranged such that its standing surface (20), and preferably the entire drip tray (6), is spaced in functional position along the height axis (H), from a standing surface (15) of the device housing (4), and thereby is spaced from a supporting surface (17) for the device housing (4).

4. Beverage preparation device according to one of the preceding claims,
**characterized in that**
the at least one stand (19) is spaced from a flat tray section bottom (14) along the height axis (H).

5. Beverage preparation device according to claim 4,
**characterized in that**
a, preferably formed as horizontal flange portion, lower housing section (22) is received in a functional position in an area along the height axis (H) between the at least one stand (19) and the flat tray section bottom (14).

6. Beverage preparation device according to claim 5,
**characterized in that**
the housing section (22) via a housing base (28) of device housing (2), which is located below a main housing part (29) of the device housing (2), is spaced from the supporting surface (17) for the device housing (2).

7. Beverage preparation device according to one of the claims 5 or 6,
**characterized in that**
the flat tray section bottom (14) is supported during insertion in the housing recess (10), in particular on the housing section (22), and thereby preferably the at least one stand (19) is spaced along the height axis (H) from the standing surface (15) of the device housing (4), and thereby from the supporting surface (1) for the device housing (4).

8. Beverage preparation device according to one of the preceding claims,
**characterized in that**
a front section (23) is arranged in a direction of insertion of the drip tray (6) in the housing recess (10) along the depth axis (T) in front of the flat tray section (14), whose front section bottom is arranged along the height axis (H) above the flat tray section bottom (14).

9. Beverage preparation device according to one of the preceding claims,
**characterized in that**
the at least one stand (19) is assigned to a, preferably downwardly open, aligning insertion opening (27), which, together with the stand (19), forms alignment means for aligning the drip tray (6) along the width axis (B) relative to the device housing (2).

10. Beverage preparation device according to one of the previous claims, **characterized in that**
the drip tray (6) comprises two stands (19) spaced along the width axis (B).

11. Beverage preparation device according to one of the preceding claims,
**characterized in that**
the drip tray (6), with help from latching means (24), is fixed in the functional position to the device housing (2), wherein the latching means (24) are formed to generate an attracting force for the automatic attracting of the drip tray (6) over an adjustment track in the functional position.

12. Beverage preparation device according to claim 11,
**characterized in that**
the latching means (24), in particular at least a spring arm (25) of the latching means (24), further preferably a pair of spring arms, are sectionally arranged along the width axis (B) between two stands (19).

## Revendications

1. Dispositif de préparation de boissons, en particulier dispositif à capsules ou machine à café automatique, comprenant un boîtier de l'appareil (2) qui s'étend le long d'un axe sagittal (T), le long d'un axe transversal (B), lequel s'étend à la perpendiculaire de l'axe sagittal (T), et le long d'un axe vertical (H), lequel s'étend à la perpendiculaire de l'axe sagittal (T) et de l'axe transversal (B), et comprenant un mécanisme de préparation de boissons, en vue de la préparation d'une boisson à base d'un substrat, avec une sortie qui est disposée sur une face frontale (3) du boîtier de l'appareil (2), en vue de l'écoulement de la boisson préparée, un bac à égouttement (6) amovible, comprenant au moins un pied de support (19) et qui est disposé, dans une position de fonctionnement, avec une section de mise en place du conteneur de boissons (5), laquelle supporte de préférence une grille à égouttement (7), dans une zone qui se trouve à l'extérieur du boîtier de l'appareil (2) et au-dessous de la sortie, de telle sorte que ledit bac à égouttement (6) pénètre à cet égard dans un renfoncement frontal du boîtier (10) par une section intérieure, et ledit bac à égouttement (6) pouvant être mis en place sur l'au moins un pied de support (19) dans une position d'extraction, laquelle peut être ajustée à partir du boîtier de l'appareil (2); l'au moins un pied de support (19) étant disposé de telle sorte que ledit pied de support (19) est disposé, dans la position de fonctionnement, à l'intérieur d'une surface de projection axiale du boîtier de l'appareil (2), mesurée par rapport à l'axe vertical du boîtier de l'appareil, ainsi qu'au-dessous de ou à l'intérieur du boîtier de l'appareil (2),
**caractérisé en ce que**
le bac à égouttement (6) présente une section extérieure en forme de cuvette à bord élevé (8), laquelle est conçue de préférence, tout au moins en grande partie, au niveau de la section de mise en place du conteneur de boissons (5), et présente également une section en forme de cuvette à bord plat (9), laquelle est, de manière préférée, conçue d'une seule pièce avec ladite section extérieure en forme de cuvette à bord élevé (8) et laquelle est conçue de manière préférée, tout au moins en grande partie, au niveau de la section intérieure; la section en forme de cuvette à bord plat (9) présentant, de manière préférée, une extension plus importante le long de l'axe sagittal (T) que la section en forme de cuvette à bord élevé (8) ; **en ce que** l'au moins un pied de support (19) est disposé au-dessous de la section en forme de cuvette à bord plat (9) ; et **en ce que** l'au moins un pied de support (19) s'étend le long de l'axe sagittal (T), en partant de la section en forme de cuvette à bord élevé (8), jusqu'au-dessous de la section en forme de cuvette à bord plat (9).

2. Dispositif de préparation de boissons selon la revendication 1,
**caractérisé en ce que**
l'au moins un pied de support (19) est disposé avec une distance latérale le long de l'axe transversal (B) par rapport aux bordures latérales inférieures du boîtier de l'appareil (2) qui s'étendent le long de l'axe sagittal (T).

3. Dispositif de préparation de boissons selon l'une des revendications 1 et 2,
**caractérisé en ce que**
l'au moins un pied de support (19) est disposé de telle sorte que sa surface de support (20), et de manière préférée la totalité du bac à égouttement (6), est, dans la position de fonctionnement, espacée d'une surface de support (15) du boîtier de l'appareil (4) le long de l'axe vertical (H), et est par conséquent espacée d'une surface d'appui (17) du boîtier de l'appareil (4) .

4. Dispositif de préparation de boissons selon l'une des revendications précédentes,
**caractérisé en ce que**
l'au moins un pied de support (19) est espacé d'un fond de la section en forme de cuvette à bord plat (14) le long de l'axe vertical (H).

5. Dispositif de préparation de boissons selon la revendication 4,
**caractérisé en ce que**
une section inférieure du boîtier (22), conçue de manière préférée sous la forme d'une section plate horizontale, est, dans la position de fonctionnement, logée dans une zone située le long de l'axe vertical (H) entre l'au moins un pied de support (19) et le fond de la section en forme de cuvette à bord plat (14).

6. Dispositif de préparation de boissons selon la revendication 5,
**caractérisé en ce que**
la section du boîtier (22) est espacée de la surface d'appui (17) du boîtier de l'appareil (2) par l'intermédiaire d'un socle de boîtier (28) du boîtier de l'appareil (2), lequel se trouve au-dessous d'une partie principale de boîtier (29) du boîtier de l'appareil (2) .

7. Dispositif de préparation de boissons selon l'une des revendications 5 et 6,
**caractérisé en ce que**
le fond de la section en forme de cuvette à bord plat (14) vient prendre appui en particulier sur la section du boîtier (22) lors de l'insertion dans le renfoncement du boîtier (10) ; et **en ce que**, de manière préférée, l'au moins un pied de support (19) est de ce fait espacé de la surface de support (15) du boîtier de l'appareil (4), le long de l'axe vertical (H), et est par conséquent espacé de la surface d'appui (1) pour le boîtier de l'appareil (4).

8. Dispositif de préparation de boissons selon l'une des revendications précédentes,
**caractérisé en ce qu'**une section frontale (23) est disposée dans le renfoncement du boîtier (10) le long de l'axe sagittal (T) dans une direction d'insertion du bac à égouttement (6), en amont de la section en forme de cuvette à bord plat (14), section frontale (23) dont le fond est disposé au-dessus du fond de la section en forme de cuvette à bord plat (14), le long de l'axe vertical (H).

9. Dispositif de préparation de boissons selon l'une des revendications précédentes,
**caractérisé en ce que**
une ouverture d'insertion et d'alignement (27), laquelle est, de manière préférée, ouverte vers le bas, est associée à l'au moins un pied de support (19), laquelle ouverture d'insertion et d'alignement (27) forme, conjointement avec le pied de support (19), un moyen d'alignement destiné à l'alignement du bac à égouttement (6) le long de l'axe transversal (B), par rapport au boîtier de l'appareil (2).

10. Dispositif de préparation de boissons selon l'une des revendications précédentes,
**caractérisé en ce que**
le bac à égouttement (6) présente deux pieds de support (19) espacés le long de l'axe transversal (B).

11. Dispositif de préparation de boissons selon l'une des revendications précédentes,
**caractérisé en ce que**
le bac à égouttement (6) est, dans la position de fonctionnement, fixé solidement au niveau du boîtier de l'appareil (2) à l'aide de moyens d'encliquetage (24) ;dans lequel les moyens d'encliquetage (24) sont conçus en vue de générer, dans la position de fonctionnement, une force d'entraînement en vue de l'entraînement autonome du bac à égouttement (6) par un tronçon de réglage.

12. Dispositif de préparation de boissons selon la revendication 11,
**caractérisé en ce que**
les moyens d'encliquetage (24), en particulier au moins un bras à ressort (25) des moyens d'encliquetage (24), préférentiellement une paire de bras à ressort, sont disposés par sections entre deux pieds de support (19), le long de l'axe transversal (B).
